# FASCICULE DE BREVET EUROPEEN

(11) **EP 2 959 382 B1**
(45) Date de publication et mention de la délivrance du brevet: **28.06.2017**
(21) Numéro de dépôt: 14705764.0
(22) Date de dépôt: 19.02.2014
(51) Int. Cl.: G06F 9/45, G06F 9/44, G06F 9/455

(54) **SYSTEME DE COMPILATION DYNAMIQUE D'AU MOINS UN FLOT D'INSTRUCTIONS**
SYSTEM ZUR DYNAMISCHEN KOMPILIERUNG VON MINDESTENS EINEM ANWEISUNGSFLUSS
SYSTEM FOR DYNAMIC COMPILATION OF AT LEAST ONE INSTRUCTION FLOW

(30) Priorité: 19.02.2013 FR 1351409
(43) Date de publication de la demande: 30.12.2015
(73) Titulaire: Commissariat à l'Énergie Atomique et aux Énergies Alternatives, 75015 Paris (FR)
(72) Inventeur: CARBON, Alexandre, F-91440 Bures-sur-Yvette (FR); LHUILLER, Yves, F-91120 Palaiseau (FR)
(74) Mandataire: Priori, Enrico
(86) Numéro de dépôt international: PCT/EP2014/053212
(87) Numéro de publication internationale: WO 2014/128153

(56) Documents cités:
- EP-A2- 1 197 847
- RADHAKRISHNAN R ET AL: "Improving Java performance using hardware translation", PROCEEDINGS OF THE INTERNATIONAL CONFERENCE ON CUSTOM ANDSEMICUSTOM ICS, XX, XX, 1 janvier 2001 (2001-01-01), pages 427-439, XP002961169,
- HARIPRAKASH G ET AL: "Hardware compilation for high performance Java processors", PROCEEDINGS OF THE INTERNATIONAL CONFERENCE ON ARCHITECTURE OF COMPUTING SYSTEMS - ARCS 2002, APRIL 8-12, 2002, KARLSRUHE, GERMANY,, 8 avril 2002 (2002-04-08), pages 125-133, XP009175028,
- HOOGERBRUGGE J ET AL: "PIPELINED JAVA VIRTUAL MACHINE INTERPRETERS", 9TH INTERNATIONAL CONFERENCE ON COMPILER CONSTRUCTION (CC 2000). BERLIN, GERMANY, MARCH 25 - APRIL 2, 2000; [LECTURE NOTES IN COMPUTER SCIENCE ; 1781], SPRINGER, BERLIN [U.A.], vol. 1781, 25 mars 2000 (2000-03-25), pages 35-49, XP008060384, ISBN: 978-3-540-67263-0
- SCOTT K ET AL: "Retargetable and reconfigurable software dynamic translation", FIRST INTERNATIONAL SYMPOSIUM ON CODE GENERATION AND OPTIMIZATION: FEEDBACK-DIRECTED AND RUNTIME OPTIMIZATION (CGO '03). SAN FRANCISCO, CALIFORNIA, MARCH 23-26, 2003, IEEE COMPUT. SOC - LOS ALAMITOS, CA, USA, 23 mars 2003 (2003-03-23), pages 36-47, XP010638067, ISBN: 978-0-7695-1913-5

## Description

L'invention concerne un système de compilation dynamique d'au moins un flot d'instructions et s'applique au domaine de l'informatique embarquée.

La compilation regroupe un ensemble d'opération ayant pour objectif de convertir un ensemble d'instructions lisibles par l'être humain composant un programme informatique en un code machine, c'est-à-dire un ensemble d'instructions lisibles par un dispositif cible. Dans la suite de la description, le dispositif cible est appelé simplement cible et correspond par exemple à un processeur.

La compilation peut être décrite de manière simplifiée comme une succession de trois étapes. Une première étape vérifie la syntaxe du code source et la traduit en une représentation intermédiaire non optimisée.

Une deuxième étape de compilation regroupe un ensemble d'opérations d'optimisation indépendantes de la cible. Un exemple d'optimisation consiste à dérouler les boucles d'instructions de manière à en permettre une exécution séquentielle. Le code ainsi obtenu correspond alors à une représentation intermédiaire optimisée (RIO).

Une troisième étape transforme la représentation intermédiaire optimisée en code machine, par exemple en assembleur. Des optimisations peuvent également être réalisées à ce stade.

Des techniques de compilation dynamique sont aujourd'hui utilisées. Cela signifie qu'une ou plusieurs étapes de compilation sont appliquées au moment de l'exécution du programme informatique par la cible. Ces techniques permettent d'adapter un programme informatique auquel est associé un code source de manière à ce que celui-ci puisse être exécuté sur des cibles différentes nécessitant différents codes machine. Ces techniques permettent également d'adapter un programme informatique afin de l'optimiser en fonction des conditions d'utilisations. La ou les étapes de compilation mises en oeuvre au moment de l'exécution du programme peuvent utiliser en entrée le code source, une représentation intermédiaire optimisée ou non, ou bien un code machine à traduire pour une nouvelle cible nécessitant un code machine différent ou à optimiser pour la cible courante.

Dans le domaine de l'informatique embarquée, certaines contraintes doivent être prises en compte pour l'utilisation d'applications. En effet, un dispositif portatif tel qu'un téléphone portable intelligent présente habituellement des ressources de calcul spécialisées, conséquence d'une conception adaptée à une utilisation spécifique. En outre, sa consommation énergétique doit être optimisée afin de garantir une autonomie suffisante.

Les algorithmes de compilation dynamique présentent une forte irrégularité. En effet, la représentation en mémoire du flot d'instructions à traiter est complexe du fait des optimisations successives qui fragmentent la représentation du flot d'instruction. Il est dès lors souvent difficile de prévoir à l'avance l'emplacement et la nature des différentes instructions constituants le flot d'instructions en entrée. Les processeurs embarqués ne disposent pas des mécanismes permettant de gérer cette irrégularité. Les étapes de chargement et de décodage réalisées sur le flot d'instructions d'entrée sont particulièrement coûteuses en temps d'exécutionsur ces processeurs car elles sont nombreuses et irrégulières.

A titre d'exemple, pour certaines applications dans le domaine de l'embarqué, un code intermédiaire est téléchargé par un terminal mobile. Des exemples de codes intermédiaires sont le code à octet Java bytecode, le code à octet CIL (Common Infrastructure Language) et le code à octet de LLVM (LowLevel Virtual Machine). Après avoir été optimisée et transformée en code machine, l'application peut être directement exécutée sur la cible. Cette solution a comme avantage de minimiser la quantité de mémoire nécessaire au stockage de l'application sur le terminal mobile. En effet, le code intermédiaire peut être adapté de manière à ce qu'il prenne moins de place que le code machine de l'application. En outre, cela évite également de stocker en mémoire différents code machine pour l'application en mémoire lorsque l'on se trouve dans le cas d'une architecture hétérogène, c'est-à-dire une architecture comportant plusieurs unités de calcul avec des jeux d'instruction différents.

Cependant, la mise en oeuvre des techniques de compilation dynamique dans le domaine de l'embarqué implique souvent une dégradation des performances. En particulier, le temps total d'exécution incluant phases de compilation et d'exécution des applications est allongé de par la forte complexité des algorithmes et l'occupation mémoire n'est pas optimisée.

L'article de R. Radhakrishnan et al. « Improving Java performance using hardware translation », Proceedings of the International Conférence on Custom and Semicustom (ICS'01), 1er janvier 2001 décrit un système de compilation selon le préambule de la revendication 1, comprenant un circuit d'accélération matériel et un coeur programmable.

Le document EP 1 197 847 et l'article de G. Hariprakash et al. « Hardware compilation for high performance Java processors », Proceedings of the Interrnational Conference on Architecture of Computing Systems (ARCS 2002), 8 avril 2002 divulguent des systèmes de compilation matérielle qui comprennent des « pipelines » permettant de découpler le chargement/décodage d'instructions de leur traduction, les différents étages de pipeline faisant partie d'un même processeur.

L'article de J. Hoogerbrugge et al. « Pipelined Java Virtual Machine Interprters », 9^{th} International Conférence on Compiler Construction CC2000, 25 mars 2000 et celui de K. Scott et al. « Retargetable and reconfigurable software dynamic translation », First International Symposium on Code Generation and Optimization : Feedback-directed and Runtime Optimization (GCO'03), 23 - 26 mars 2003, décrivent des solutions logicielles permettant d'optimiser la traduction dans un interprète.

Un but de l'invention est notamment de pallier les inconvénients de l'état de la technique et ou d'y apporter des améliorations.

A cet effet l'invention a pour objet un système de compilation d'au moins un flot d'instructions pour son exécution sur un circuit cible, ledit système comprenant un circuit d'accélération matériel réalisant les fonctions de chargement d'un ensemble d'au moins une portion dudit flot vers une mémoire interne audit circuit et de décodage dudit ensemble, les instructions résultant du chargement et du décodage étant transmises à un coeur programmable fonctionnant en parallèle du circuit d'accélération matériel, ledit coeur programmable réalisant la transcription des instructions décodées en un code machine adapté pour être exécuté sur le circuit cible.

Dans un mode de réalisation, le flot d'instruction est une représentation intermédiaire préalablement obtenue à partir du code source d'une application à exécuter.

Dans un mode de réalisation, le flot d'instruction est le code source d'une application à exécuter.

Dans un mode de réalisation, le flot d'instruction est le code machine d'une application à adapter ou optimiser pour un circuit cible donné.

Selon un aspect de l'invention, le circuit d'accélération matériel sélectionne une portion du flot d'instruction, vérifie si cette portion a déjà été traduite en code machine, si c'est le cas ladite portion n'étant pas chargée par le circuit d'accélération matériel, une autre portion étant alors sélectionnée. La vérification de l'existence d'une traduction antérieure d'une portion de code machine s'effectue, par exemple, par comparaison de l'adresse de la portion à charger par rapport aux adresses des portions traduites contenues dans la mémoire de résultat.

Selon un aspect de l'invention, la vérification de l'existence d'une traduction préalable est mise en oeuvre en parcourant la mémoire de résultat à la recherche d'une portion déjà traduite.

Le décodage d'une portion de code correspond par exemple à une décomposition en un ensemble d'opérations simples.

Le code machine généré est par exemple transmis à une mémoire pour être stocké.

La mémoire de résultat du code chargé et décodé est par exemple interne au système.

Dans un mode de réalisation, un mécanisme détermine la durée pendant laquelle un code machine correspondant à une portion de code compilée auparavant par le système de compilation dynamique n'a pas été exécutée, la mémoire utilisée pour stocker ce code machine étant libérée si celui-ci n'a pas été exécuté pendant une durée Te prédéfinie.

Le circuit d'accélération matériel est par exemple de type ASIC.

Le circuit d'accélération matériel, le coeur programmable et la mémoire communiquent par exemple les uns avec les autres à l'aide d'un bus de communication.

D'autres caractéristiques et avantages de l'invention apparaîtront à l'aide de la description qui suit donnée à titre illustratif et non limitatif, faite en regard des dessins annexés parmi lesquels :
- la figure 1 donne un exemple de système mettant en oeuvre le principe d'une compilation dynamique ;
- la figure 2 est un chronogramme illustrant les améliorations en terme de temps d'exécution obtenues par le système selon l'invention ;
- la figure 3 donne un exemple d'architecture embarquée dans laquelle un système de compilation dynamique est utilisé ;
- la figure 4 présente un mode de réalisation du système de compilation dynamique selon l'invention ;
- la figure 5 donne un exemple de mise en oeuvre d'un accélérateur matériel pour système de compilation dynamique.

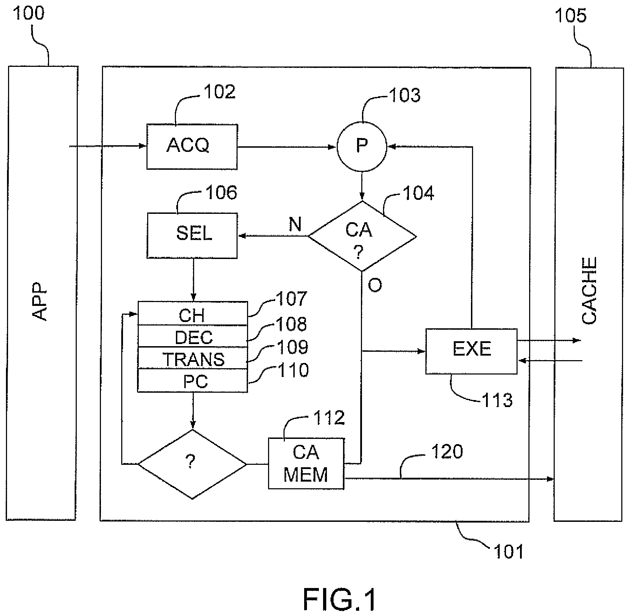

La figure 1 donne un exemple de système mettant en oeuvre le principe d'une compilation dynamique.

Dans cet exemple, un flot d'instructions mémorisé dans une mémoire générale 100 est utilisé comme entrée d'un dispositif 101 mettant en oeuvre la compilation dynamique de ce flux. Ce flot d'instructions correspond par exemple à une représentation intermédiaire obtenue à partir du code source d'une application donnée, au code source lui-même ou à du code machine. Le dispositif de compilation dynamique 101 comprend un module d'acquisition de contexte 102 permettant de localiser l'ensemble des instructions du flot d'opérations à compiler en vue de leur exécution. Lorsqu'une portion de code correspondant à une ou plusieurs instructions est identifiée pour être compilée, celle-ci est chargée et un pointeur d'exécution du code est mis à jour 103. Ce pointeur est par exemple dirigé vers l'adresse du début d'une portion de code à analyser pour éventuellement la compiler ou la recompiler. Dans la suite de la description, cette portion de code est appelée portion de code courante.

Il est ensuite vérifié 104 si la portion de code acquise a déjà été traduite en code machine. Dans cet exemple, le code machine est mémorisé dans une mémoire cache 105 accessible du dispositif 101. L'étape de vérification 104 est donc mise en oeuvre en vérifiant si la portion de code machine correspondant à la portion de code courante 102 est présente en mémoire cache 105 peut être mise en oeuvre. Il est en effet habituel de mémoriser le code machine obtenu après traduction dans une mémoire cache 105.

Si la portion de code courante a déjà été traduite, l'environnement de compilation dynamique pointe 113 vers le code machine correspondant de manière à l'exécuter.

Si la portion de code n'a pas encore été traduite, alors la portion de code courante est considérée 106 comme une portion de code à compiler. Le traitement appliqué est alors composé d'une succession d'opérations. Dans un premier temps, la portion de code courante est chargée 107 depuis la mémoire générale 100 vers une mémoire interne au système de compilation dynamique. Ensuite, la portion de code courante est décodée, c'est-à-dire qu'elle est décomposée 108 en informations de base. Cette décomposition correspond par exemple en une identification d'un ensemble d'opérations simples permettant de réaliser la ou les fonctions mises en oeuvre par la portion de code courante. Ces opérations simples correspondent par exemple à des additions et des soustractions. Le décodage a également pour objectif d'identifier les données à utiliser comme entrées par ces opérations. Une fois décodé, le code est traduit 109 en code machine directement exécutable par la cible.

Il est alors vérifié 110 si au moins une seconde portion de code intermédiaire est liée à la portion courante. Un lien est un branchement vers une autre portion du code intermédiaire mis en oeuvre par exemple par un saut d'adresse. S'il existe une portion de code intermédiaire liée, les étapes 107, 108, 109, 110 lui sont appliquées. Sinon 112, le code machine résultant de la traduction d'une ou plusieurs portions de code est mémorisé 120 dans la mémoire cache 105 pour être ensuite exécuté par la cible 113.

Une fois le code machine exécuté 113, le pointeur vers le flot d'instructions d'entrée est mis à jour 103 et le traitement de la prochaine portion de code est mis en oeuvre.

Le système de compilation dynamique selon l'invention comprend un accélérateur matériel mettant en oeuvre un ensemble de fonctions. Cet accélérateur matériel fonctionne en parallèle avec un coeur programmable. L'utilisation combinée de ces deux éléments de traitement a notamment pour objectif d'améliorer les performances en termes d'exécution d'applications utilisant la compilation dynamique. Le système proposé permet d'obtenir des performances comparables à celles obtenues sur un processeur de type généraliste tout en satisfaisant aux contraintes de l'embarqué en termes de consommation, de performance d'exécution et de surface occupée. Avantageusement, la taille mémoire requise pour mémoriser du code machine peut être réduite. En effet, dans le système selon l'invention, le code machine peut être généré plus rapidement. Il est donc possible de libérer de la mémoire allouée aux portions de code les moins utilisées et de régénérer lesdites portions en cas de besoin.

L'utilisation d'un accélérateur matériel permet d'obtenir un gain maximal en termes de temps d'exécution pour les traitements de chargement et de décodage en leur allouant des ressources dédiées spécifiquement développées dans cette optique. L'utilisation d'un coeur programmable pour la transformation en code machine permet au système d'être adaptable à différentes cibles.

Dans un mode de réalisation préféré, l'ensemble de fonctions mis en oeuvre par l'accélérateur matériel comprend les fonctions de chargement 107 et de décodage108. L'accélérateur matériel est un circuit dédié spécialement à ces fonctions. Cet accélérateur est par exemple un circuit de type ASIC (Application-Specific Integrated Circuit).

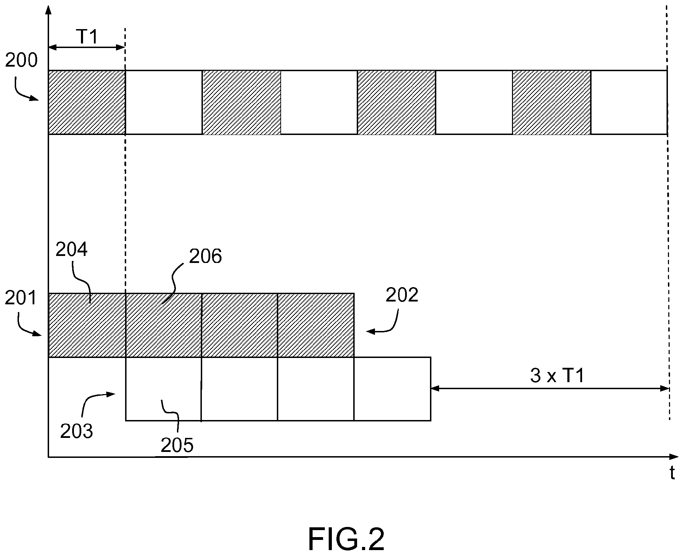

La figure 2 est un chronogramme illustrant les améliorations en termes de temps d'exécution obtenues par le système selon invention.

Dans cet exemple, il est considéré que quatre portions de code sont traitées. Ces portions de code sont chargées et décodées puis traduites en code machine.

Dans un système classique 200, pour chacune de ces portions de code, les opérations de chargement et de décodage d'une part puis de traduction en code machine d'autre part sont exécutées séquentiellement. Ces opérations sont habituellement mises dans oeuvre par un processeur programmable.

De manière simplifiée, et afin d'illustrer au mieux l'un des avantages du système selon l'invention pour ce qui concerne le temps d'exécution, il est considéré que ces deux phases prennent un temps identique T1 quelle que soit la portion de code traitée. Ainsi, pour traiter quatre portions de code, huit plages temporelles de durée T1 sont requises.

Dans le cas d'un système de compilation dynamique selon l'invention 201, l'utilisation d'un accélérateur matériel pour réaliser les opérations de chargement et de décodage 202 en parallèle avec l'utilisation d'un coeur programmable pour réaliser les opérations de traduction en code machine 203 permet de paralléliser ces opérations. Ainsi, une fois que les opérations de chargement et de décodage 204 pour la première portion de code sont effectuées, l'opération de traduction 205 est réalisée par le coeur programmable. En conséquence, l'assistant matériel est disponible pendant ce temps pour réaliser les opérations de chargement et de décodage 206 pour la seconde portion de code à traiter. L'utilisation conjointe de l'assistant matériel et du coeur programmable permet ainsi de traiter quatre portions de code en un temps égal à 5×T1. Ainsi, un gain de temps de 3×T1 est obtenu en termes de temps d'exécution.

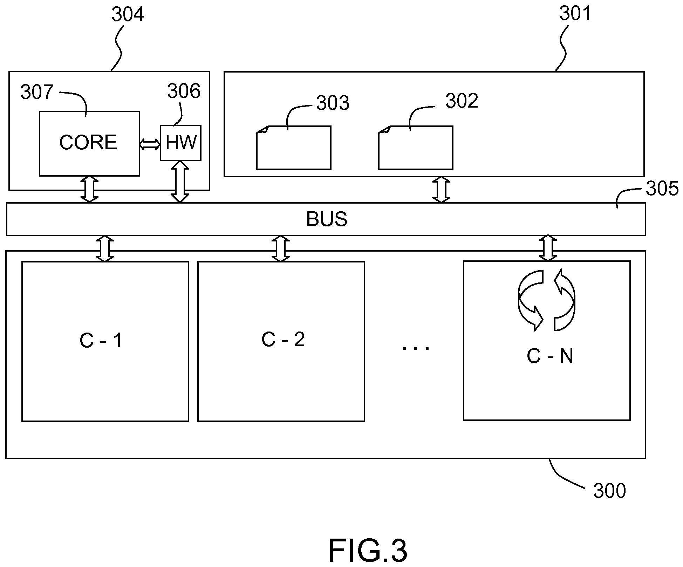

La figure 3 donne un exemple d'architecture embarquée dans laquelle un système de compilation dynamique est utilisé.

Cette architecture comprend un dispositif multi-coeurs 300 comprenant N coeurs utilisés pour l'exécution d'applications. En d'autres termes, le dispositif multi-coeurs 300 correspond à N cibles d'exécution. Ladite architecture comprend également une zone de mémoire permettant de stocker du code machine 302 et au moins un flot d'opérations 303 correspondant à au moins une mémoire de programmes dédiée à la cible. De manière alternative, le code machine généré peut être envoyé dans une zone mémoire.

Un système de compilation dynamique 304 est utilisé pour optimiser les performances du système. Ce système 304 est composé d'un accélérateur matériel 306 et d'un coeur programmable 307. Le coeur programmable correspond par exemple à un processeur RISC (Reduced Instruction Set Computer) et l'accélérateur hardware 306 à un circuit ASIC.

Une mémoire 301 est utilisée pour mémoriser le flot d'instructions à traiter 303 et le code machine 302 exécutable par le coeur. Le flot d'instruction correspond par exemple au code source de l'application, à une représentation intermédiaire, ou à du code machine. Le flot d'instruction est composé d'une ou plusieurs portions de code.

Les trois composants 300, 301, 304 peuvent communiquer les uns avec les autres à l'aide d'un bus de communication 305.

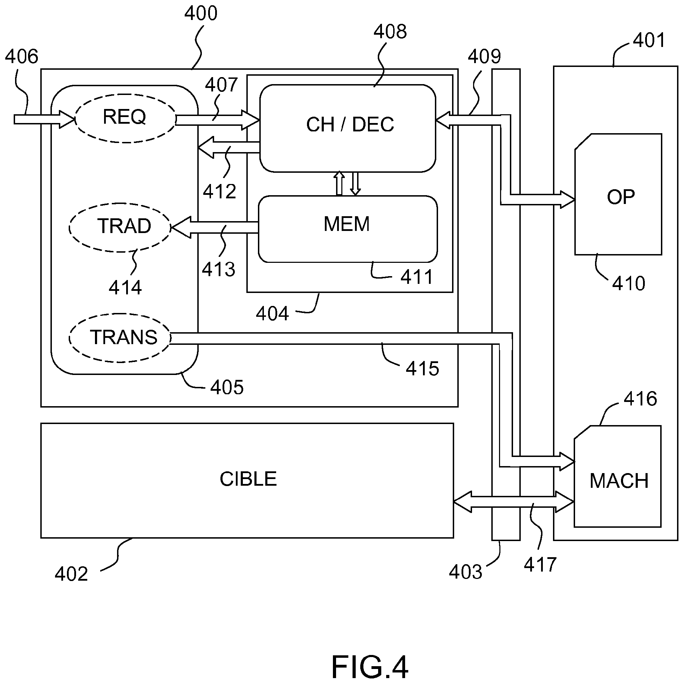

La figure 4 présente un mode de réalisation du système de compilation dynamique.

Le système de compilation dynamique 400 peut communiquer avec au moins une mémoire 401 et une cible 402 à l'aide d'un bus de communications 403.

Le système de compilation dynamique 400 est composé d'un accélérateur matériel 404 et d'un coeur programmable 405.

Dans cet exemple de mise en oeuvre, le système fonctionne de la manière suivante lorsque l'exécution d'un programme associé à une application donnée est demandée. Une requête 406 est transmise au coeur programmable 405 et correspond à un ordre de compilation et/ou de recompilation d'une portion de code appartenant à une application donnée. Cette requête est par exemple générée par la cible 402.

Le coeur programmable 405 émet à son tour une requête 407 à destination de l'accélérateur matériel 404. Comme décrit précédemment, l'accélérateur matériel 404 a pour fonction de charger le flot d'opérations à compiler et de le décoder. Pour cela, l'assistant matériel 404 comprend un module 408 permettant de réaliser ces opérations. Ce module parcourt le flot d'opération à traiter mettant en oeuvre l'application à compiler. Ledit module 408 va donc accéder 409 à une zone 410 de la mémoire 401 contenant la portion de code à compiler, la charger et la décoder. Il est à noter qu'une vérification préalable peut être faite, ladite vérification visant à déterminer si la portion de code n'est pas disponible en mémoire de résultat. Cela permet d'éviter de refaire les opérations de chargement et de décodage si celles-ci ont déjà été effectuées.

Le résultat obtenu est par exemple stocké dans une mémoire interne 411 à l'accélérateur matériel 404. Cette mémoire interne 411 est appelée mémoire de résultats.

Lorsque le travail de l'assistant matériel 404 est terminé pour la portion de code en cours de traitement, une requête d'acquittement 412 est envoyée au coeur programmable 405. Cette requête 412 indique au coeur programmable 405 que le résultat des opérations de chargement et de décomposition est disponible. Le coeur programmable accède 413 à ce résultat et traduit 414 en code machine directement exploitable par la cible 402 le flot d'opérations décodé. En parallèle, le coeur programmable se met en attente d'une nouvelle requête. Alternativement, il envoie une requête à l'assistant matériel 404 pour traiter la prochaine portion de code à compiler et à exécuter. Le code machine est ensuite transmis 415 et stocké 416 en mémoire 401. Dans cet exemple, la zone de mémoire 416 est accessible aux différents éléments de l'architecture. La cible 417 peut ainsi accéder au code machine pour son exécution.

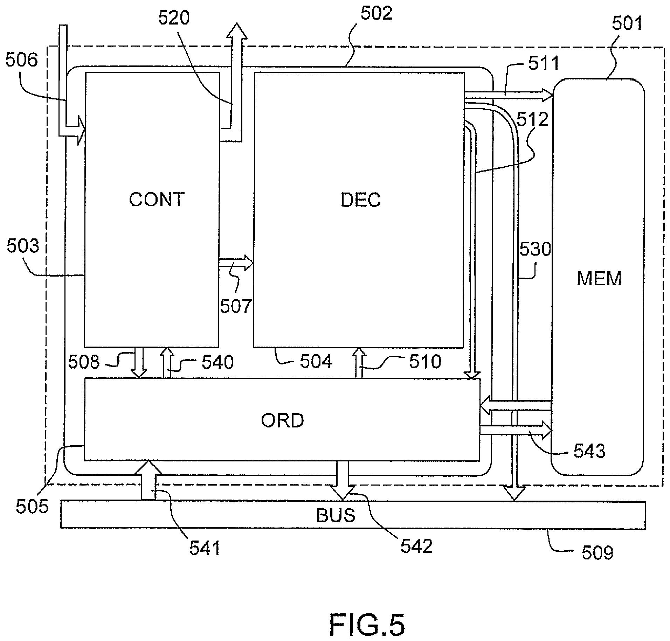

La figure 5 donne un exemple de mise en oeuvre d'accélérateur matériel pour le système de compilation dynamique. Cet assistant matériel est composé d'une mémoire de résultats 501 et d'un module de chargement et de décomposition 502. Le module 502 est composé de trois blocs. Un premier bloc 503 joue le rôle de contrôleur. Un deuxième bloc 504 joue le rôle de décodeur. Un troisième bloc 505 joue le rôle d'unité de chargement de flots d'instructions. Le contrôleur 503 est en charge de la gestion des requêtes en provenance du coeur programmable. Le contrôleur reçoit les requêtes 506 de compilation et les transmet 507 au décodeur et 508 à l'unité de chargement 505. L'unité de chargement 505 a pour fonction de charger la portion de code à analyser. Pour cela il parcourt le flot d'opérations composant le programme à compiler de manière à identifier et charger au moins une portion de code. En outre, il vérifie que le flot d'opérations n'a pas déjà été chargé et décodé en mémoire de résultat 501. Si c'est le cas, il est alors possible d'utiliser directement le code déjà décodé et de déclencher via le contrôleur 503 une requête à destination du coeur programmable pour que celui-ci procède à la traduction en code machine. Une requête mémoire 543 pour aller vérifier si la portion de code n'a pas déjà chargée et décodée peut être utilisée. Ainsi, le temps de traitement est réduit car il n'est plus nécessaire de re-décoder l'ensemble du flot d'instructions mettant en oeuvre l'application.

Une requête mémoire 542 est utilisée pour récupérer la portion de code par exemple en utilisant un bus de communication 509. Le résultat de cette requête 541 peut être aussi acquis via le bus de communication 509.

L'unité de chargement 505 transmet les instructions une à une 510 au bloc de décodage 504.

Lorsqu'une instruction a été décodée, le résultat est envoyé 511 et stocké dans la mémoire de résultats 501. L'instruction décodée peut être également envoyée 512 à l'unité de chargement 505 afin de l'assister dans son parcours du flot d'instructions. Cette information peut être également utilisée lorsque l'ensemble des instructions de la portion de code a été décodé pour informer le contrôleur 503 que l'analyse est terminée et qu'une requête de retour 520 peut être envoyée au coeur programmable via le contrôleur 505 et une requête d'acquittement 540.

Dans un autre mode de réalisation, il est également possible de transmettre 530 la sortie du décodeur 504 à la cible pour une exécution à la volée. Cela est possible à la condition que le décodeur soit choisi tel qu'il puisse fournir directement des instructions de code machine à la cible et donc que l'utilisation d'un coeur programmable pour la traduction ne soit pas requise.

## Revendications

1. Système de compilation (304, 400) d'au moins un flot d'instructions (303, 410) pour son exécution sur un circuit cible (300) comprenant :
• un circuit d'accélération matériel (306, 404) réalisant les fonctions de chargement d'un ensemble d'au moins une portion dudit flot vers une mémoire interne audit circuit et de décodage dudit ensemble ; et
• un coeur programmable (307, 405),
**caractérisé en ce que** les instructions résultant du chargement et du décodage sont transmises audit coeur programmable (307, 405) fonctionnant en parallèle du circuit d'accélération matériel, ledit coeur programmable (307, 405) réalisant la transcription des instructions décodées en un code machine adapté pour être exécuté sur le circuit cible (300).

2. Système selon la revendication 1 dans lequel le flot d'instruction est une représentation intermédiaire préalablement obtenue à partir du code source d'une application à exécuter.

3. Système selon la revendication 1 dans lequel le flot d'instruction est le code source d'une application à exécuter.

4. Système selon la revendication 1 dans lequel le flot d'instruction est le code machine d'une application à adapter ou optimiser pour un circuit cible donné.

5. Système selon l'une des revendications précédentes dans lequel le circuit d'accélération matériel (306, 404, 502) sélectionne une portion du flot d'instruction (303, 410), vérifie si cette portion a déjà été traduite en code machine, si c'est le cas ladite portion n'étant pas chargée par le circuit d'accélération matériel, une autre portion étant alors sélectionnée, la vérification de l'existence d'une traduction antérieure d'une portion de code machine s'effectuant par comparaison de l'adresse de la portion à charger par rapport aux adresses des portions traduites contenues dans une mémoire de résultat (411) interne au circuit d'accélération matériel (400).

6. Système selon l'une des revendications précédentes dans lequel le décodage d'une portion de code correspond à une décomposition en un ensemble d'opérations simples.

7. Système selon l'une des revendications précédentes dans lequel le code machine généré (416) est transmis à une mémoire (301, 401) externe au système de compilation pour être stocké.

8. Système selon la revendication 6 dans lequel la mémoire de résultat (411, 501) du code chargé et décodé est interne au système.

9. Système selon l'une des revendications 7 ou 8 comprenant un mécanisme déterminant la durée pendant laquelle un code machine correspondant à une portion de code compilée auparavant par le système de compilation dynamique n'a pas été exécutée, la mémoire (301, 401) utilisée pour stocker ce code machine étant libérée si celui-ci n'a pas été exécuté pendant une durée Te prédéfinie.

10. Système selon l'une des revendications précédentes dans lequel le circuit d'accélération matériel est de type ASIC.

11. Système selon l'une des revendications précédentes dans lequel le circuit d'accélération matériel (306, 404, 502), le coeur programmable (307, 405, 503) et la mémoire (401) communiquent les uns avec les autres à l'aide d'un bus de communication (305, 403, 509).

## Patentansprüche

1. System zum Kompilieren (304, 400) von wenigstens einem Anweisungsfluss (303, 410) zur Ausführung auf einer Zielschaltung (300), das Folgendes umfasst:
• eine Hardwarebeschleunigungsschaltung (306, 404), die die Funktionen des Ladens eines Satzes von wenigstens einem Teil des Flusses zu einem Speicher innerhalb der Schaltung und des Decodierens des Satzes ausführt; und
• einen programmierbaren Kern (307, 405),
**dadurch gekennzeichnet, dass** die von der Ladung und der Decodierung resultierenden Anweisungen zu dem programmierbaren Kern (307, 405) übertragen werden, der parallel zu der Hardwarebeschleunigungsschaltung arbeitet, wobei der programmierbare Kern (307, 405) die Umsetzung der decodierten Anweisungen in einen Maschinencode realisiert, der zur Ausführung auf der Zielschaltung (300) ausgelegt ist.

2. System nach Anspruch 1, bei dem der Anweisungsfluss eine intermediäre Darstellung ist, die zuvor auf der Basis des Quellcodes einer auszuführenden Anwendung erhalten wird.

3. System nach Anspruch 1, bei dem der Anweisungsfluss der Quellcode einer auszuführenden Anwendung ist.

4. System nach Anspruch 1, bei dem der Anweisungsfluss der Maschinencode einer Anwendung ist, die für eine gegebene Zielschaltung adaptiert oder optimiert werden soll.

5. System nach einem der vorherigen Ansprüche, bei dem die Hardwarebeschleunigungsschaltung (306, 404, 502) einen Teil des Anweisungsflusses (303, 410) wählt, überprüft, ob dieser Teil bereits in Maschinencode umgesetzt wurde, wobei wenn ja, der Teil nicht von der Hardwarebeschleunigungsschaltung geladen wird, wobei dann ein anderer Teil gewählt wird, wobei die Überprüfung der Existenz einer früheren Umsetzung eines Maschinencode-Teils durch Vergleichen der Adresse des zu ladenden Teils mit Bezug auf die Adressen der umgesetzten Teile erfolgt, die in einem Ergebnisspeicher (411) in der Hardwarebeschleunigungsschaltung (400) enthalten sind.

6. System nach einem der vorherigen Ansprüche, bei dem die Decodierung eines Code-Teils einer Zerlegung in einen Satz von einfachen Operationen entspricht.

7. System nach einem der vorherigen Ansprüche, bei dem der erzeugte Maschinencode (416) in einen Speicher (301, 401) außerhalb des Kompilationssystems zum Speichern übertragen wird.

8. System nach Anspruch 6, in dem der Ergebnisspeicher (411, 501) des geladenen und decodierten Code innerhalb des Systems ist.

9. System nach Anspruch 7 oder 8, das einen Mechanismus umfasst, der die Dauer bestimmt, während der ein Maschinencode entsprechend einem zuvor von dem dynamischen Kompilationssystem kompilierten Code-Teil nicht ausgeführt wurde, wobei der zum Speichern dieses Maschinencode benutzte Speicher (301, 401) freigesetzt wird, wenn er während einer vordefinierten Dauer Te nicht ausgeführt wurde.

10. System nach einem der vorherigen Ansprüche, bei dem die Hardwarebeschleunigungsschaltung vom ASIC-Typ ist.

11. System nach einem der vorherigen Ansprüche, bei dem die Hardwarebeschleunigungsschaltung (306, 404, 502), der programmierbare Kern (307, 405, 503) und der Speicher (401) miteinander über einen Kommunikationsbus (305, 403, 509) kommunizieren.

## Claims

1. A compilation system (304, 400) for at least one instruction flow (303, 410) to be executed on a target circuit (300) comprising:
• a hardware acceleration circuit (306, 404) performing the functions of loading a set of at least one portion of said flow to an internal memory of said circuit and of decoding said set; and
• a programmable core (307, 405),
**characterised in that** the instructions resulting from the loading and from the decoding are transmitted to said programmable core (307, 405) operating in parallel to the hardware acceleration circuit, said programmable core (307, 405) producing the transcription of the decoded instructions into a machine code suitable for execution on the target circuit (300).

2. The system according to claim 1, wherein the instruction flow is an intermediate representation previously obtained from the source code of an application to be executed.

3. The system according to claim 1, wherein the instruction flow is the source code of an application to be executed.

4. The system according to claim 1, wherein the instruction flow is the machine code of an application to be adapted or optimised for a given target circuit.

5. The system according to any of the preceding claims, wherein the hardware acceleration circuit (306, 404, 502) selects a portion of the instruction flow (303, 410), checks if this portion has already been translated into machine code, if so said portion is not loaded by the hardware acceleration circuit, and another portion is then selected, the checking for the existence of an earlier translation of a portion of machine code being performed by comparison of the address of the portion to be loaded against the addresses of the translated portions contained in a result memory (411) internal to the hardware acceleration circuit (400).

6. The system according to any of the preceding claims, wherein the decoding of a code portion corresponds to a decomposition into a set of simple operations.

7. The system according to any of the preceding claims, wherein the machine code generated (416) is transmitted to a memory (301, 401) external to the compilation system to be stored.

8. The system according to claim 6, wherein the result memory (411, 501) of the loaded and decoded code is internal to the system.

9. The system according to either of claims 7 or 8, comprising a mechanism determining the time during which a machine code corresponding to a code portion compiled previously by the dynamic compilation system has not been executed, the memory (301, 401) used to store this machine code being freed up if the latter has not been executed during a predefined time Te.

10. The system according to any of the preceding claims, wherein the hardware acceleration circuit is of the ASIC type.

11. The system according to any of the preceding claims, wherein the hardware acceleration circuit (306, 404, 502), the programmable core (307, 405, 503) and the memory (401) communicate with one another with the aid of a communication bus (305, 403, 509).
